# FASCICULE DE BREVET EUROPEEN

(11) **EP 3 461 297 B1**
(45) Date de publication et mention de la délivrance du brevet: **13.05.2020**
(21) Numéro de dépôt: 17748842.6
(22) Date de dépôt: 25.07.2017
(51) Int. Cl.: H01M 10/625, H01M 10/6556, H01M 10/6568, H01M 10/613, H01M 10/6557, H01M 10/6567

(54) **DISPOSITIF DE REFROIDISSEMENT DE BATTERIES ET PROCEDE DE FABRICATION CORRESPONDANT**
BATTERIEKÜHLUNGSVORRICHTUNG UND HERSTELLUNGSVERFAHREN DAVON
BATTERY COOLING APPARATUS AND MANUFACTURING METHOD THEREOF

(30) Priorité: 27.07.2016 FR 1657236
(43) Date de publication de la demande: 03.04.2019
(73) Titulaire: Valeo Systemes Thermiques, 78320 Le Mesnil Saint Denis (FR)
(72) Inventeur: BOURGEAIS, Hervé, 72210 La Suze Sur Sarthe (FR); LEMERCIER, Philippe, 72210 La Suze Sur Sarthe (FR); TISON, Frédéric, 72210 La Suze Sur Sarthe (FR); GOHARD, Céline, 72210 La Suze Sur Sarthe (FR)
(74) Mandataire: Tran, Chi-Hai
(86) Numéro de dépôt international: PCT/FR2017/052066
(87) Numéro de publication internationale: WO 2018/020140

(56) Documents cités:
- EP-A1- 3 331 054
- WO-A1-2012/062712
- FR-A1- 2 951 259
- US-A1- 2015 207 187

## Description

### Domaine technique de l'invention

L'invention est du domaine des dispositifs pour refroidir les batteries, et plus particulièrement les batteries d'un véhicule à motorisation électrique et/ou hybride.

### Etat de la technique

L'énergie électrique des véhicules à motorisation électrique et/ou hybride est fournie par une ou plusieurs batteries.

Un problème posé réside dans le fait que durant leurs fonctionnements, les batteries sont amenées à chauffer et risquent ainsi de s'endommager.

Il est donc nécessaire d'utiliser des refroidisseurs de batteries afin de les maintenir à une température acceptable.

De tels refroidisseurs comprennent un faisceau de tubes reliant entre elles au moins deux boîtes collectrices dans lesquels sont raccordées, de façon fixe et étanche, des extrémités correspondantes des tubes.

Un fluide de refroidissement peut alors circuler à travers les tubes et les boîtes collectrices afin d'échanger thermiquement avec les batteries.

Chacune des boîtes collectrices dans laquelle débouchent les tubes du faisceau comporte une plaque collectrice présentant des orifices de passage des tubes.

Les tubes sont solidarisés à cette plaque, par exemple par brasage, au niveau de ces orifices.

Cette plaque, généralement désignée "collecteur", est coiffée par un couvercle ou "boîte à fluide" de manière que collecteur et boite à fluide définissent un volume commun dans lequel débouchent les extrémités correspondantes des tubes, et par lequel sont opérées le cas échéant l'entrée et la sortie du fluide.

Le couvercle est pourvu de raccordements à des conduites d'admission et de collecte de fluide.

Son volume intérieur est en outre subdivisé en une pluralité de sous-volumes distincts permettant de réunir ensemble certains groupes de tubes du faisceau de manière à définir une configuration de circulation de fluide prédéterminée dans le refroidisseur, avec plusieurs allers et retours de fluide dans le faisceau de tubes.

L'une des techniques d'assemblage couramment utilisée à cet effet est l'assemblage brasé, où l'ensemble des éléments du refroidisseur est passé dans un four de brasage permettant à un métal d'apport de réaliser à la fois la solidarisation des divers éléments (collecteurs, couvercles, faisceau de tubes, etc.) et leur étanchéité.

Le document FR2967246 A1 divulgue un refroidisseur pour au moins un élément de stockage d'énergie électrique selon l'art antérieur.

Cependant, il a été constaté que le brasage des éléments du refroidisseur tend à dégrader la résistance mécanique des tubes, leur tenue à la pression et leur tenue à la corrosion interne et externe.

Cette dégradation de la résistance mécanique peut conduire à une déformation des tubes lorsque ces derniers sont parcourus par un fluide sous pression.

Par ailleurs, lorsque les tubes présentent une section circulaire, il a été observé des défauts de rectitude des génératrices du tube cylindrique suite au brasage.

De la même façon, lorsque les tubes présentent une surface plane orientée vers les batteries (ce qui est le cas des tubes de section oblongue, par exemple), de sorte à avoir une large surface d'échange de la chaleur, il a été observé des défauts de planéité de cette surface plane.

Du fait de ces défauts de rectitude ou de planéité des tubes dus au brasage, le transfert thermique entre les batteries et le refroidisseur n'est pas homogène, si bien que le refroidisseur n'assure pas une régulation optimale de la température des batteries.

Pour éviter ces défauts lors du brasage, il a été proposé d'augmenter le nombre de supports du châssis de brasage positionnés sous le tube à braser.

Cette solution présente toutefois l'inconvénient d'augmenter les coûts du châssis et, par conséquent, les coûts de fabrication.

### Exposé de l'invention

L'invention a pour but d'améliorer la résistance mécanique des tubes d'un refroidisseur pour batteries et d'optimiser, par conséquent, le refroidissement de ces dernières.

A cet effet, l'invention a pour objet un refroidisseur selon la revendication 1.

L'invention propose ainsi un refroidisseur dans lequel l'ensemble des éléments du refroidisseur sont solidarisés mécaniquement et de manière étanche.

La liaison mécanique et l'étanchéité entre chaque collecteur et les conduits du refroidisseur sont assurées par la compression d'un joint d'étanchéité entre ces deux composants.

Ce même joint, ou un autre, assure également l'étanchéité entre le couvercle et le collecteur correspondant, et évite ainsi, ou à tout le moins minimise, le risque de fuites de liquide de refroidissement.

Grâce à cet assemblage mécanique, on ne dégrade pas la résistance mécanique des tubes (contrairement à un assemblage par brasage) et on limite les éventuels défauts de planéité des tubes.

Les performances du refroidisseur s'en trouvent grandement améliorées.

Selon un aspect particulier de l'invention, ledit au moins un conduit est monté serré dans un trou de passage dudit joint d'étanchéité qu'il traverse, de sorte que le joint d'étanchéité est comprimé entre la paroi intérieure dudit orifice de passage du collecteur et la paroi extérieure dudit conduit.

Selon un aspect particulier de l'invention, le trou de passage s'étend dans une tétine du joint d'étanchéité disposée dans l'orifice de passage dudit collecteur.

Selon un aspect particulier de l'invention, la tétine présente sur sa surface extérieure une lèvre périphérique de retenue du joint d'étanchéité sur le collecteur.

Selon un aspect particulier de l'invention, le bord latéral du joint d'étanchéité est pris en sandwich entre une gorge périphérique ménagée dans le collecteur et le couvercle.

Selon un aspect particulier de l'invention, ledit au moins un conduit comprend une pluralité de canaux de circulation du liquide caloporteur.

Selon un aspect particulier de l'invention, ledit au moins un conduit comprend un évasement d'extrémité pour former un relief de retenue dans un sens dudit au moins un conduit par rapport au collecteur.

Selon un aspect particulier de l'invention, ledit au moins un conduit comprend à chaque extrémité un seul étage d'évasement d'extrémité selon la direction longitudinale dudit conduit.

Selon un aspect particulier de l'invention, l'évasement d'extrémité présente une hauteur comprise entre 1 et 10 mm dans le sens longitudinal dudit conduit.

Selon un aspect particulier de l'invention, la largeur de l'évasement est supérieure à la largeur dudit orifice de passage dudit au moins un conduit.

Selon un aspect particulier de l'invention, l'évasement d'extrémité est réalisé à l'intérieur d'un canal.

Selon un aspect particulier de l'invention, l'évasement d'extrémité est réalisé sans déformer les jambes de renfort formant les cloisons latérales dudit canal.

Selon un aspect particulier de l'invention, le refroidisseur comprend au moins une butée de conduit pour retenir ledit au moins un conduit dans l'autre sens par rapport au collecteur.

Selon un aspect particulier de l'invention, ladite au moins une butée est solidaire dudit couvercle.

L'invention a également pour objet un procédé d'assemblage d'un refroidisseur pour au moins un élément de stockage d'énergie électrique, le refroidisseur comprenant au moins un conduit de circulation d'un liquide caloporteur dont les extrémités pénètrent dans une boîte collectrice, caractérisé en ce qu'il comprend les étapes suivantes :
- on positionne au moins un joint d'étanchéité sur un collecteur présentant au moins un orifice de passage d'un conduit de circulation d'un liquide caloporteur et une gorge périphérique de sorte qu'une tétine du joint d'étanchéité soit disposée dans l'orifice de passage dudit collecteur et que le bord latéral du joint d'étanchéité soit placé dans la gorge périphérique dudit collecteur,
- on emmanche à force au moins un conduit de circulation d'un liquide caloporteur dans un trou de passage de la tétine de sorte qu'une extrémité dudit au moins un conduit traverse le joint d'étanchéité et le collecteur,
- on évase l'extrémité dudit au moins un conduit de sorte à former un relief de retenue dudit conduit dans un sens par rapport au collecteur,
- on assemble mécaniquement un couvercle sur le collecteur, de sorte à former une première boîte collectrice dans lequel ledit au moins un conduit débouche, en positionnant au préalable le couvercle dans la gorge périphérique dudit collecteur en contact avec le bord latéral du joint d'étanchéité,
- on répète les étapes précédentes pour solidariser ledit au moins un conduit à la deuxième boîte collectrice dudit refroidisseur.

Le procédé de fabrication d'un tel refroidisseur à assemblage mécanique ne requiert donc pas, pour l'assemblage des éléments entre eux, de brasure, c'est-à-dire d'apport de matière.

Ce procédé présente en outre l'avantage de ne pas nécessiter une installation coûteuse et complexe.

Ainsi, un tel procédé ne comporte pas d'étape complexe de chauffage dans une atmosphère neutre et confinée.

Selon un aspect particulier de l'invention, ledit au moins un conduit est solidarisé simultanément à la première et à la deuxième boîte collectrice dudit refroidisseur.

### Liste des figures

D'autres caractéristiques et avantages de l'invention apparaîtront plus clairement à la lecture de la description suivante d'un mode de réalisation, donné à titre de simple exemple illustratif et non limitatif, et des dessins annexés, parmi lesquels :
- la figure 1 est une vue en perspective d'un refroidisseur selon un mode de réalisation de l'invention ;
- la figure 2 est une vue en coupe d'un refroidisseur conforme à l'invention au niveau d'une boîte collectrice ;
- la figure 3 est une vue en coupe partielle, au niveau d'une boîte collectrice d'un refroidisseur conforme à l'invention, montrant l'assemblage d'un tube sur le collecteur ;
- la figure 4 est une vue de détail partielle d'une boîte collectrice et un conduit montrant la mise en œuvre d'une butée sur le couvercle de la boîte pour retenir le conduit dans un sens par rapport au collecteur de la boîte ;
- la figure 5A est une vue de dessus d'un joint d'étanchéité mis en œuvre dans un refroidisseur conforme à l'invention ;
- la figure 5B est une vue partielle, en coupe, du joint d'étanchéité de la figure 5A ;
- la figure 6A est une vue de dessus d'une plaque collectrice mise en œuvre dans un refroidisseur conforme à l'invention ;
- la figure 6B est une vue de détail de la plaque collectrice de la figure 6A ;
- la figure 7 est une vue en coupe partielle d'un couvercle d'une boîte collectrice mise en œuvre dans un refroidisseur conforme à l'invention ;
- les figures 8A et 8B sont des vues externe et en coupe longitudinale respectivement d'une extrémité évasée d'un tube mis en œuvre dans un refroidisseur conforme à l'invention ;
- les figures 9A à 9E illustrent l'assemblage d'une extrémité d'un tube sur une boîte collectrice mise en œuvre dans un refroidisseur conforme à l'invention ;
- les figures 10A à 10H illustrent de façon schématique différents types d'évasement de retenue d'un tube sur le collecteur d'un refroidisseur conforme à l'invention ;
- la figure 11 est une vue de détail d'une joue de maintien de la distance entre les deux collecteurs d'un refroidisseur conforme à l'invention.

### Description détaillée de l'invention

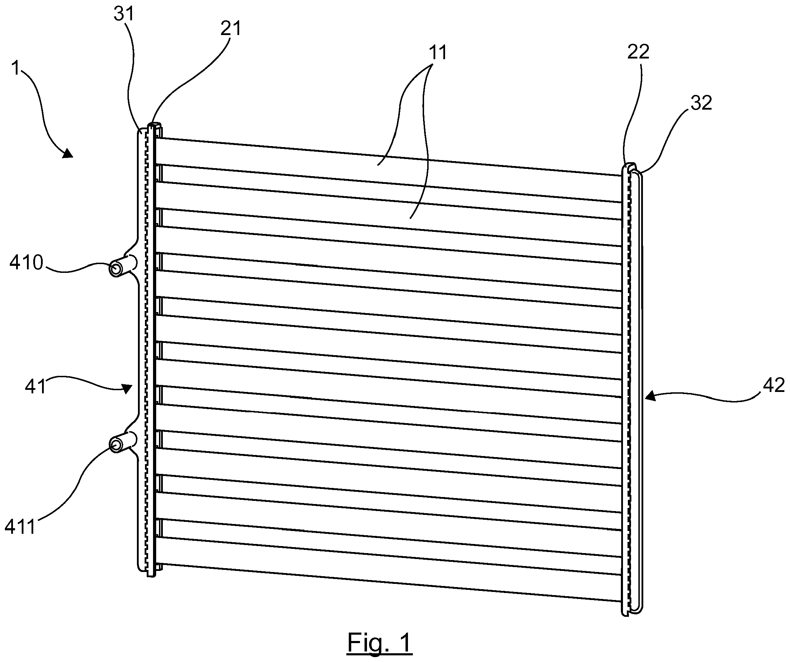

La figure 1 est une vue en perspective d'un refroidisseur 1 selon un mode de réalisation de l'invention.

Ce dernier est destiné à équiper un véhicule automobile de type hybride ou électrique pour refroidir une ou plusieurs batteries formant une source d'énergie pour l'entraînement du véhicule automobile.

Le refroidisseur 1 comprend un faisceau de tubes, ou conduits, 11 rectilignes et de même longueur qui sont placés parallèlement les uns aux autres et alignés de façon à former une rangée unique dans lesquels un liquide de refroidissement, tel que de l'eau glycolée, est destiné à circuler.

Selon l'invention, les tubes 11 présentent une section droite de forme sensiblement oblongue.

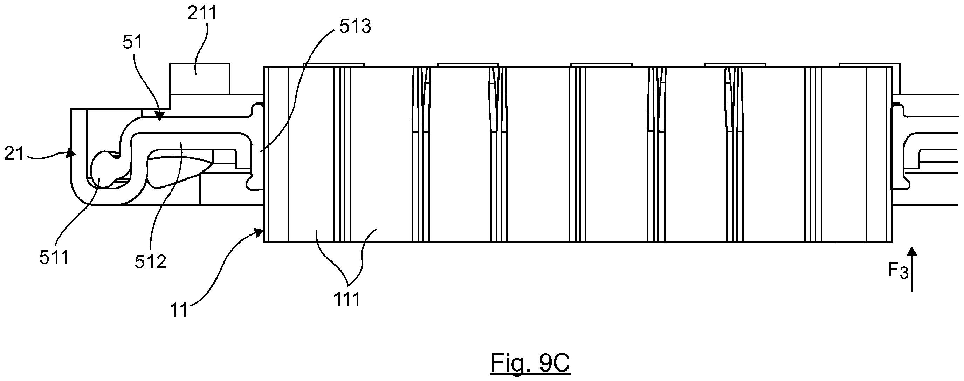

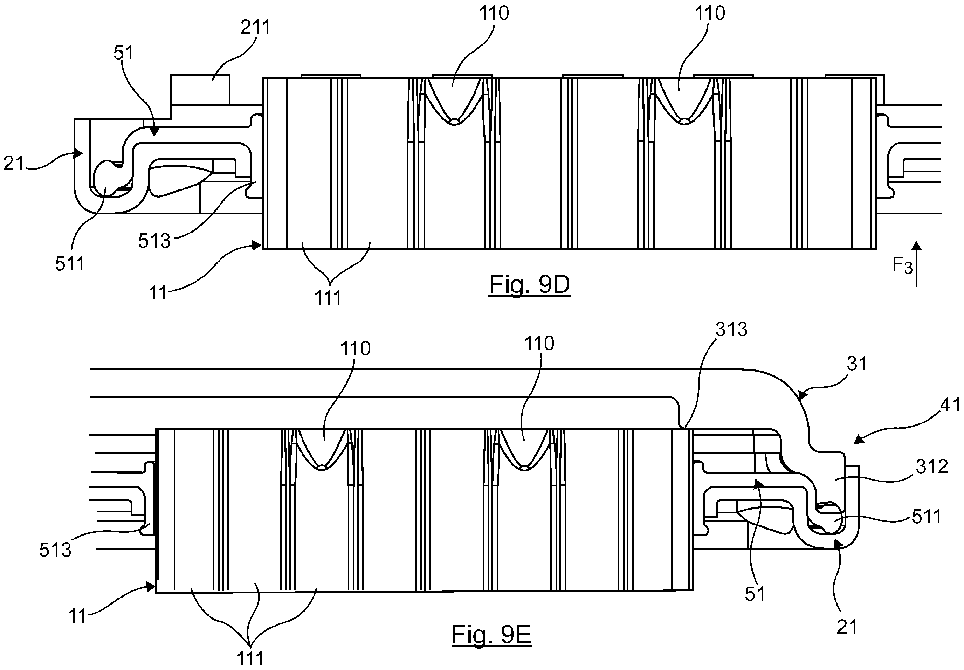

Ces tubes 11 sont ici en aluminium extrudé et présentent une pluralité de canaux 111 juxtaposés de circulation du liquide (visibles sur les figures 9C et 9D). Les canaux 111 d'un tube 11 sont séparés par des jambes de renfort qui assurent la tenue mécanique des tubes à la pression (c'est-à-dire qui minimisent la déformation des tubes 11 sous la pression).

La pression de fonctionnement du refroidisseur de l'invention est, par exemple, de 1 bar, mais peut être inférieure ou supérieure à cette valeur.

Dans une variante de réalisation, les tubes multi-canaux sont électro-soudés mais ne présentent pas dans ce cas de jambe de renfort entre les canaux.

Le faisceau de tubes 11 comprend une première extrémité et une deuxième extrémité.

Comme montré sur la figure 1, la première extrémité du faisceau de tubes 11 est destinée à être assemblée avec un premier collecteur 21 et la deuxième extrémité du faisceau de tubes 11 est destinée à être assemblée avec un deuxième collecteur 22.

Le refroidisseur 1 comprend en outre un couvercle 31, 32 associé à chacun des premier et deuxième collecteurs 21, 22 pour former une boîte collectrice 41, 42 destinée à collecter et à répartir le liquide de refroidissement.

Chaque boîte collectrice 41, 42 comporte ainsi une plaque métallique généralement appelée "collecteur" 21, 22 réunissant les extrémités des tubes 11 du faisceau, plaque à laquelle est associé un élément en forme de couvercle 31, 32 généralement désigné "boîte à fluide" relié de manière étanche au collecteur 21, 22 par son rebord périphérique.

L'ensemble constitué par le collecteur 21, 22 et le couvercle 31, 32 correspondant définit un volume dans lesquels débouchent les tubes 11 du faisceau.

Chaque boîte collectrice 41, 42 est ainsi en communication fluidique avec les tubes 11.

Comme on le verra par la suite, les divers éléments (collecteur, boites et tubes) du refroidisseur 1 sont solidarisés ensemble mécaniquement et de manière étanche par interposition d'un joint d'étanchéité 51 assurant l'étanchéité entre chaque collecteur 21, 22 et les tubes 11, d'une part, et entre chaque collecteur 21, 22 et le couvercle 31, 32 correspondant, d'autre part.

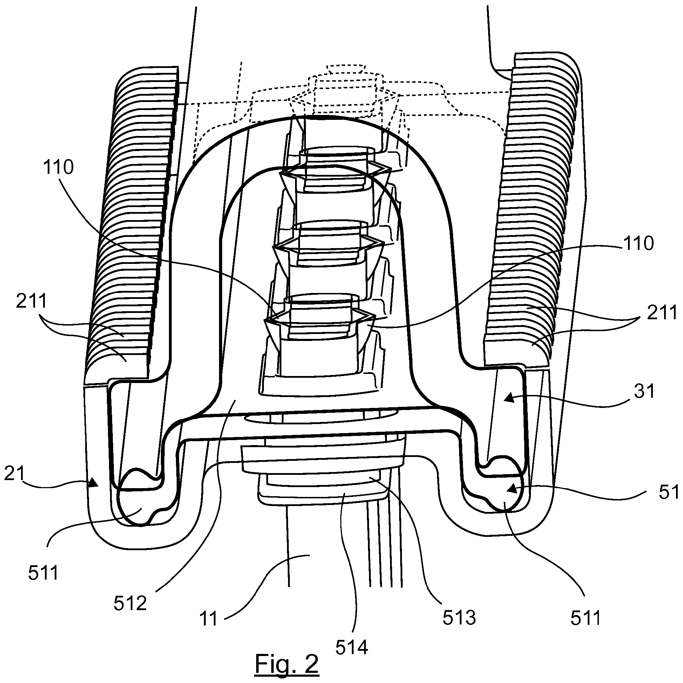

Comme illustré sur la vue en coupe de la figure 2, les tubes 11 débouchent à travers le premier collecteur 21.

Bien que cela ne soit pas illustré, il en est de même de leur extrémité opposée à travers le deuxième collecteur 22.

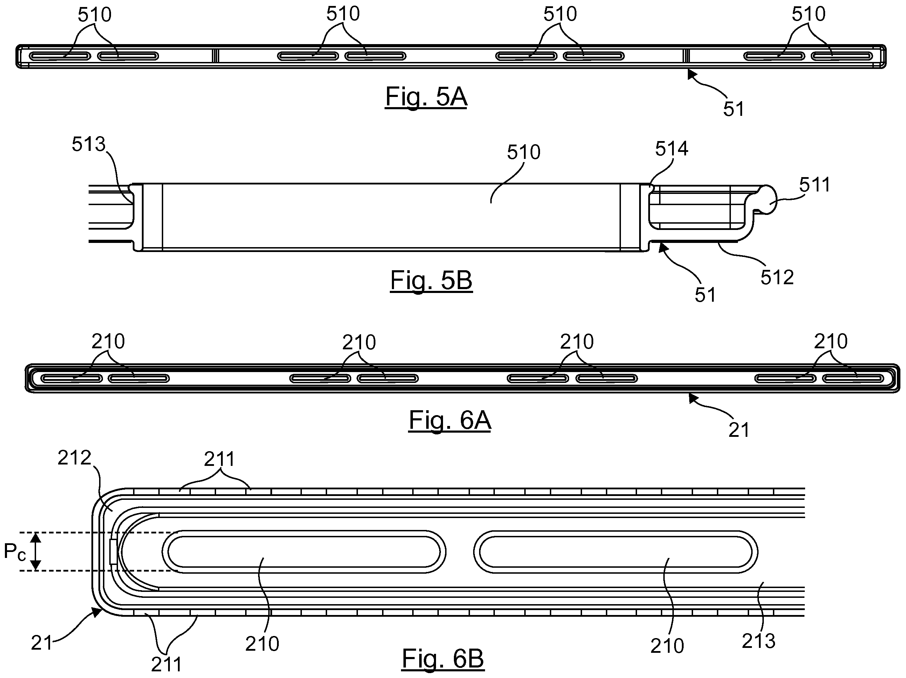

Pour cela, les collecteurs 21 comprennent des orifices 210 d'introduction et de passage des tubes 21 (figures 6A et 6B) qui présentent un contour correspondant à celui d'une section droite des tubes 11.

Autrement dit, ici, ces orifices 210 sont oblongs dans ce mode de réalisation.

Le refroidisseur 1 comprend en outre une entrée de fluide et une sortie de fluide de refroidissement agencées sur au moins une boîte collectrice.

Selon le mode de réalisation illustré, l'entrée de fluide 410 et la sortie de fluide 411 sont agencées au niveau d'une même boîte collectrice, en l'occurrence sur le couvercle 31 de la première boîte collectrice 41.

L'arrivée du liquide de refroidissement et son évacuation se fait au niveau du même premier collecteur 21.

Il est dans ce cas prévu une cloison (non représentée) dans la première boîte collectrice 41 permettant de séparer le fluide entrant dans le refroidisseur 1 et le fluide sortant du refroidisseur 1.

Ainsi, le liquide de refroidissement, par exemple de l'eau glycolée, est introduit dans la première boîte collectrice 41 par l'entrée de fluide 410, puis est distribué dans une partie des tubes 11 (dits « tubes d'entrée ») à l'aide du premier collecteur 21 de la première boîte collectrice 41.

Le fluide circule dans les tubes 11 d'entrée et traverse ces derniers dans un premier sens, passe ensuite dans la seconde boîte collectrice 42 et circule dans l'autre sens dans l'autre partie des tubes 11 (dits « tubes de sortie ») pour revenir au niveau du premier collecteur 21 et être évacué par la sortie de fluide 411 de la première boîte collectrice 41.

La seconde boîte collectrice 42, dite « boîte de retournement », est configurée pour distribuer le liquide des tubes 11 d'entrée vers les tubes 11 de sortie (si nécessaire, une ou plusieurs cloisons permettent de définir le passage du liquide dans cette seconde boîte collectrice 42).

Les tubes 11 s'étendent perpendiculairement à l'axe longitudinal des collecteurs 21, 22 et des couvercles 31, 32.

Les tubes 11 sont destinés à être en contact mécanique ou non avec au moins une batterie du véhicule, et sont avantageusement réalisés dans un matériau conducteur thermique, tel qu'un matériau métallique, par exemple en aluminium ou alliage d'aluminium.

Le refroidisseur 1 est ainsi positionné directement au contact de la ou des batteries au fond du boîtier de protection et parcouru par un liquide de refroidissement, ou indirectement au contact de la ou des batteries dans le cas d'un refroidisseur placé à l'extérieur du boîtier de protection des batteries.

L'axe longitudinal des tubes 11 est parallèle aux batteries à refroidir. Afin d'assurer le refroidissement des batteries, une des deux surfaces planes des tubes 11 oblongs (figure 2) est en contact avec les batteries, ou à distance et en regard de ces dernières, de sorte à avoir une large surface d'échange de la chaleur.

Les collecteurs 21, 22 et les couvercles 31, 32 sont de forme sensiblement rectangulaire.

Les collecteurs 21, 22 sont en aluminium ou en acier. Ils comprennent une plaque collectrice 213 plane présentant un rebord périphérique dans lequel est ménagée une gorge 212, apte à recevoir les couvercles correspondants.

La gorge 212 est préférentiellement périphérique.

Autrement dit, la gorge 212 fait le tour du collecteur 21, 22 correspondant (figures 6A et 6B).

Les orifices 210 d'introduction et de passage des tubes 11 sont ménagés au niveau d'une zone centrale de la plaque collectrice 213.

Ils présentent une forme allongée selon une direction sensiblement parallèle à l'axe longitudinal du collecteur 21, 22.

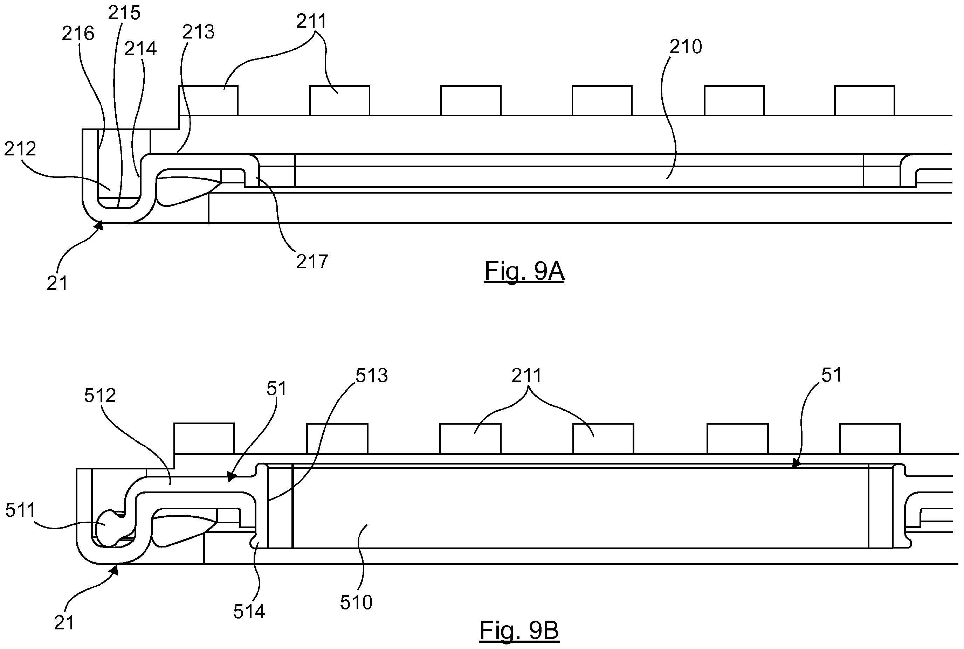

Comme cela est visible sur la vue en coupe de la figure 9A, ces orifices 210 sont délimités chacun par un bord recourbé formant un collet 217.

La hauteur du collet 217 peut être constante ou variable sur sa périphérie. Par exemple, sa hauteur aux extrémités peut être inférieure à sa hauteur sur la longueur de l'orifice 210.

Sur cette même figure, on note que la gorge 212 comprend une face latérale 214, orientée sensiblement parallèlement aux tubes 11, un fond 215, relié à la face latérale 214 et orienté sensiblement perpendiculairement à cette dernière, et une face externe 216, orientée sensiblement parallèlement à la face latérale 214.

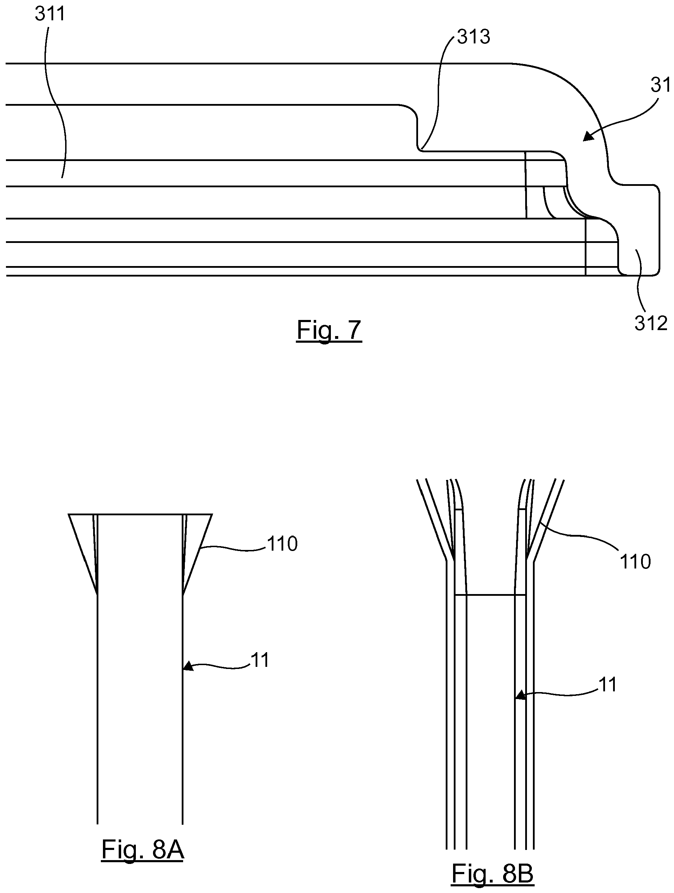

Comme illustré sur la figure 7, le couvercle 31 est bombé et possède, en section transversale, la forme générale d'un U.

Le couvercle 31 présente ainsi une cavité interne 311 apte à autoriser la circulation du fluide de refroidissement, et un bord libre, élargi, situé en périphérie de la cavité interne 311, formant un pied 312 du couvercle.

Le couvercle 32 est de forme identique.

Comme illustré sur les figures 5A et 5B, le joint d'étanchéité 51 se présente sous la forme d'une nappe 512 de forme sensiblement rectangulaire qui comprend un bourrelet 511 d'étanchéité périphérique.

Le joint d'étanchéité 51 présente plusieurs trous 510 oblongs pour le passage des tubes 11 qui sont ménagés au niveau d'une zone centrale de la nappe 512.

Ces trous 510 présentent une forme allongée selon une direction sensiblement parallèle à l'axe longitudinal du joint d'étanchéité 51.

Les trous 510 s'étendent dans des collets, appelés par la suite « tétines » 513 de retenue du collecteur correspondant.

Ces tétines 513 s'étendent perpendiculairement à la nappe 512. Les trous 510 et les tétines 513 présentent une forme complémentaire de la forme des tubes 11 destinés à les traverser.

Le joint d'étanchéité 51 est avantageusement réalisé en matériau élastomère. Il peut ainsi être réalisé en EPDM (pour " éthylène-propylène-diène monomère").

Les collecteurs 21, 22 reçoivent chacun un joint d'étanchéité 51 compressible au niveau des orifices 210 d'introduction et de passage des tubes 11.

Pour ce faire, la tétine 513 du joint d'étanchéité 51 est forcée à travers le collet 217 lors du montage.

Par ailleurs, la gorge 212 du collecteur 21, 22 est configurée pour accueillir le bourrelet 511 d'étanchéité périphérique du joint d'étanchéité 51.

A l'état assemblé des tubes 11 sur les boîtes collectrices 41, 42, le joint d'étanchéité 51 se trouve comprimé d'une part dans l'espace compris entre la paroi extérieure d'un tube 11 et le collet 217 d'un orifice 210 du collecteur 21.

Le taux de compression radiale de la tétine 513 du joint d'étanchéité 51 dans le collet 217 est compris de préférence entre 5 et 60%, par exemple entre 15 et 40%, et notamment entre 25 et 30%.

Ce ratio est égal à la différence entre l'épaisseur de la paroi de la tétine 513 avant montage et celle après montage, divisée par l'épaisseur de la paroi de la tétine 513 avant montage.

Le joint d'étanchéité 51 assure ainsi l'étanchéité de la liaison entre chacun des tubes 11 et le collecteur 21 pour empêcher les fuites de fluide.

D'autre part, le bourrelet 511 d'étanchéité périphérique du joint d'étanchéité 51 est destiné à être agencé entre le pied 312 du couvercle 31 et le collecteur 21 de sorte à assurer l'étanchéité entre le couvercle 31 et le collecteur 21.

La gorge 212 du collecteur 21, 22 est ainsi configurée pour accueillir le bourrelet 511, de sorte que ce dernier soit pris en sandwich et compressé entre le fond de la gorge 212 et le pied 312 du couvercle 31.

Les collecteurs 21, 22 sont en outre configurés pour permettre un sertissage du pied 312 du couvercle 31 dans la gorge 212.

Pour cela, la face externe 216 de la gorge 212 comprend, sur deux bords opposés du collecteur 21, une série d'ergots, de dents ou de languettes 211 espacées de façon régulière destinées à être plié, comme représenté sur la figure 2, sur une face supérieure du pied 312 du couvercle 31.

Chaque collecteur 21, 22 assure donc le maintien en position du couvercle 31, 32 correspondant sur le joint d'étanchéité 51 et le collecteur 21, 22 après sertissage des dents 211 du collecteur 21, 22 sur le couvercle 31, 32 correspondant.

Il assure également la compression du joint 51 pour garantir l'étanchéité de la boîte collectrice 41, 42 au niveau de la liaison couvercle/collecteur.

Un tel assemblage mécanique du refroidisseur 1 est relativement aisé et permet d'obtenir un bon niveau d'étanchéité à l'intérieur des boîtes collectrices 41, 42 où circule le fluide.

Il n'est donc pas nécessaire de recourir au brasage pour assurer la tenue mécanique à la pression et l'étanchéité du refroidisseur de l'invention, ce qui garantit la planéité de la surface plane des tubes 11.

Par conséquent, l'échange thermique entre les tubes du refroidisseur et les batteries, et donc le refroidissement des batteries, sont optimisés.

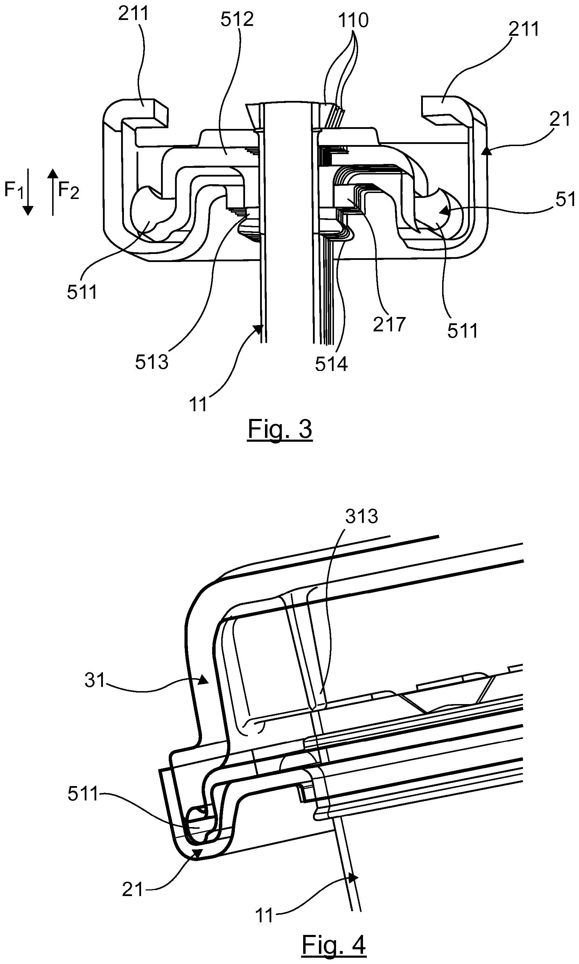

Chaque tube 11 est monté en précontrainte sur le joint d'étanchéité 51 dans la zone du collet 217 du collecteur 21 (figure 3).

En d'autres termes, chaque tube 11 est monté serré dans le trou 510 correspondant du joint d'étanchéité 51.

Il n'est donc pas nécessaire de prévoir un évasement d'étanchéité du tube 11 dans cette zone d'étanchéité.

Pour empêcher le glissement, sous l'effet de la mise sous pression du liquide de refroidissement, de l'ensemble constitué par le joint d'étanchéité, le collecteur et le couvercle sur les tubes, deux solutions sont décrites ci-après.

Une première solution consiste à prévoir, d'une part, un évasement de retenue des tubes 11 multi-canaux dans un sens par rapport au collecteur (flèche F1 sur la figure 3), et d'autre part, une butée de retenue des tubes pour retenir les tubes 11 dans l'autre sens par rapport au collecteur (flèche F2 sur la figure 3).

Pour réaliser l'évasement de retenue des tubes 11, l'extrémité des tubes 11 est déformée après l'insertion des tubes 11 sur l'ensemble joint/collecteur.

Dans tous les cas de figure décrits ci-après, la largeur de l'évasement d'un tube 11 est supérieure à la largeur Pc du collet 217 du collecteur 21 (cette largeur Pc est représentée sur la figure 6B).

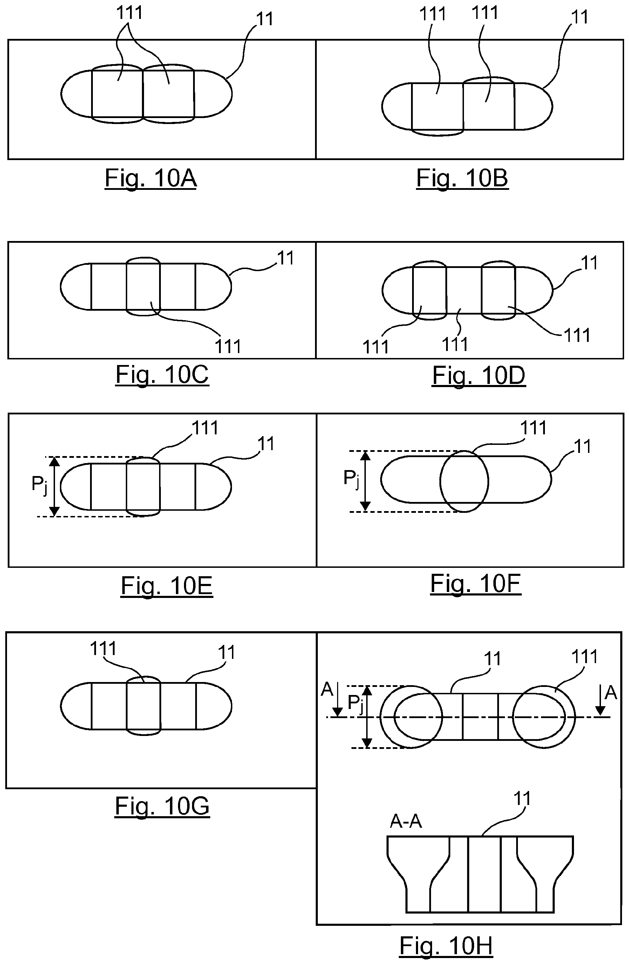

Une ou des parois des canaux 111 peuvent être déformées. Ces parois déformées peuvent être face à face (ou « en phase » comme illustré sur la figure 10A) ou opposées (ou « en opposition de phase » comme illustré sur la figure 10B).

Un canal 111 (figure 10C) ou des canaux 111 (figure 10D) d'un tube 11 peuvent être déformés.

Parmi les « n » canaux, préférentiellement « m » canaux sont déformés pour assurer la tenue à la pression et aux manipulations, avec 1/8 ≤ m/n ≤ 1.

Les deux canaux 111 d'extrémité d'un tube 11 peuvent être déformés ou non.

Les jambes des tubes peuvent être droites (figure 10E) ou déformées (figure 10F). Dans ces deux cas de figure, la largeur Pj de l'évasement est supérieure à la largeur Pc du collet 217 du collecteur 21.

Les arcs de cercle de la section oblongue du tube 11 sont déformés (figure 10H) ou non (figure 10G). Comme le montre la vue en coupe, selon l'axe A-A, de la figure 10H, c'est l'extrémité en demi-cercle de la section oblongue qui est déformée sur une hauteur prédéterminée.

On note ainsi que les jambes de renfort ne sont pas déformées latéralement pour les configurations des figures 10A à 10E et 10G, et sont étirées sans déchirure.

En d'autres termes, la largeur de l'évasement est suffisamment faible pour éviter la rupture des jambes de renfort.

Ces différentes configurations peuvent être combinées entre elles.

L'évasement d'extrémité présente une hauteur comprise entre 1 et 10 mm dans le sens longitudinal du tube 11.

Dans le mode de réalisation de la figure 2, on note que le canal 111 central des tubes 11 multi-canaux est évasé sur ses bords opposés, les évasements étant référencés 110.

Des évasements 110 formés à l'extrémité de tubes 11 sont également visibles sur les figures 8A, 8B, 9D et 9E.

On note que chaque tube 11 comprend un seul évasement 110 d'extrémité (dans le sens longitudinal du tube), c'est-à-dire un seul étage d'évasement et que la largeur de l'évasement 110 de retenue est telle que la largeur Pj du tube 11 au niveau de l'évasement 110 est supérieure à la largeur Pc du collet 217 du collecteur 21.

On note, par ailleurs, que l'évasement 110 ne participe pas à la compression du joint.

Le refroidisseur 1 comprend, par ailleurs, une ou plusieurs butées de retenue des tubes 11 pour retenir ces derniers dans l'autre sens par rapport à chacun des collecteurs 21, 22.

En d'autres termes, ces butées empêchent les tubes 11 de remonter dans le sens illustré par la flèche F2 de la figure 3, et de rentrer dans les boîtes collectrices 41, 42, ce qui permet de maintenir la distance entre les collecteurs 21,22.

Dans le mode de réalisation illustré sur les figures 4, 7 et 9D, deux butées 313 se présentant sous la forme d'une nervure sont réalisées sur la paroi intérieure du couvercle 313.

Ces deux butées 313 sont chacune destinées à venir en contact avec une extrémité d'un tube 11 du faisceau de tubes 11 du refroidisseur 1.

Ainsi, les évasements 110 de retenue des tubes 11 et les butées 313 permettent de figer la position relative de l'ensemble couvercle/collecteur/joint d'étanchéité pour empêcher cet ensemble boite/collecteur/joint de glisser le long des tubes 11 lisses sous l'effet de la mise sous pression du liquide de refroidissement (ces éléments assurent ainsi la tenue mécanique à la pression du refroidisseur 1).

Une deuxième solution consiste à prévoir, d'une part, un évasement de retenue des tubes selon l'une des approches décrites précédemment, et d'autre part, des joues disposées de part et d'autre de chaque ensemble couvercle/collecteur.

Ces joues sont serties sur les boites et/ou les collecteurs et permettent de maintenir la distance entre les premier et deuxième collecteur 21, 22.

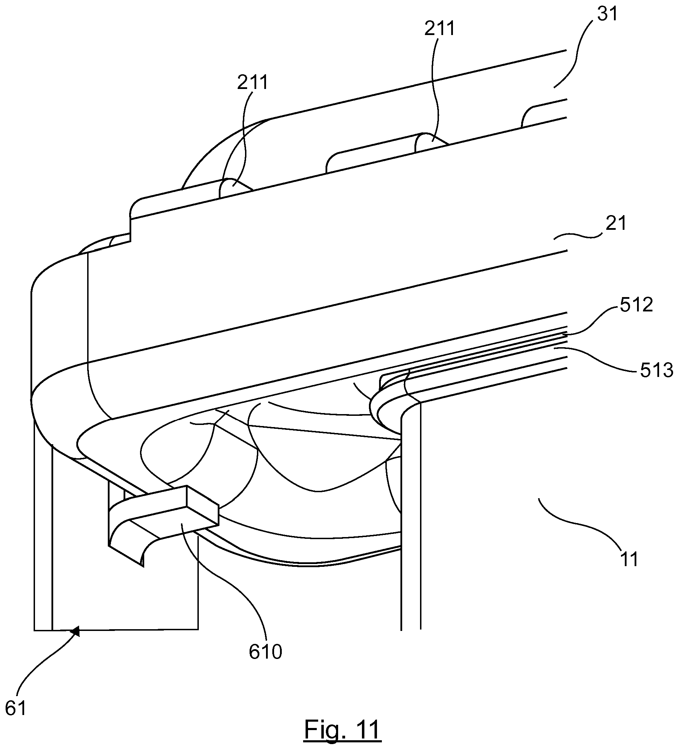

La figure 11 montre partiellement une des joues 61 qui présente une patte 610 recourbée de maintien du collecteur 21 sur lequel est monté le couvercle 31.

Ainsi, les évasements 110 de retenue des tubes 11 et les joues 61 permettent de figer la position relative de l'ensemble couvercle/collecteur/joint d'étanchéité pour empêcher cet ensemble boite/collecteur/joint de glisser le long des tubes 11 lisses.

### Procédé de fabrication du refroidisseur

On décrit maintenant un procédé de fabrication d'un refroidisseur conforme à l'invention en relation avec les figures 2 et 9A à 9E.

Au cours d'une première étape S1, le joint d'étanchéité 51 est positionné sur le collecteur 21, illustré seul sur la figure 9A, et pressé de sorte à introduire les tétines 513 du joint d'étanchéité 51 dans les orifices 210 correspondants du collecteur 21 (figure 9B).

Le bourrelet 511 périphérique du joint d'étanchéité 51 est en outre positionné dans la gorge 212 périphérique du collecteur 21.

Une lèvre 514 ménagée sur chaque tétine 513 retient le joint d'étanchéité 51 sur le collecteur 21 et évite ainsi la chute du joint d'étanchéité 51 du collecteur 21.

Au cours d'une deuxième étape S2, l'ensemble collecteur 21/joint d'étanchéité 51 est placé dans une tête de chaussage dans laquelle un poinçon comprime le joint d'étanchéité 51 contre le collecteur 21.

Dans une troisième étape S3, les tubes 11 sont insérés dans les trous 510 des tétines 513 dans la direction illustrée par une flèche F3 sur la figure 9C.

Les tubes 11 sont solidarisés à l'ensemble collecteur 21/joint d'étanchéité 51 par emmanchage à force. Les extrémités des tubes 11 sont reçues dans la plaque collectrice 213 du collecteur 21 et assemblées mécaniquement à ce dernier par l'intermédiaire du joint d'étanchéité 51 compressible.

Dans une quatrième étape S4 (figure 9D), l'extrémité des tubes 11 est évasée par le biais d'un poinçon de forme conique de façon symétrique de sorte à former un relief de retenue de chaque tube 11 dans un sens par rapport au collecteur 21.

Dans le cas illustré sur les figures 9D et 9E, les extrémités de deux canaux 110 du tube 11 sont évasées.

Dans une cinquième étape S5, le couvercle 31 est assemblé sur le collecteur 21, par sertissage, pour former une boîte collectrice 41 (figure 9E).

Pour ce faire, le pied 312 du couvercle 31 est inséré dans la gorge 212 du collecteur 21 en contact avec le bourrelet 511 périphérique du joint d'étanchéité 51, puis les ergots 211 du collecteur 21 sont rabattus sur les bords du couvercle 31 (figure 2).

Ainsi, le couvercle 31 est reçu à l'intérieur du collecteur 21 en vis-à-vis de la plaque collectrice 213, et recouvre ce dernier.

Les mêmes étapes sont mises en œuvre pour assembler l'autre extrémité des tubes 11 à la deuxième boîte collectrice 42.

Ces étapes sont de préférence mises en œuvre simultanément des deux côtés des tubes 11.

### Autres aspects et variantes

Outre le fait qu'il permet de ne pas dégrader les propriétés mécaniques des tubes et d'améliorer leur planéité des surfaces des tubes en contact avec les batteries (ou en regard des ces dernières), l'assemblage mécanique du refroidisseur de l'invention présente d'autres avantages par rapport à un refroidisseur de l'art antérieur assemblé par brasage.

L'approche de l'invention permet ainsi d'éviter la pollution interne par le flux résiduel de brasage qui réagit avec le liquide de refroidissement en dégradant ses propriétés anti-corrosion et de gélification, ce qui peut aboutir à une perte de performance thermique du refroidisseur par bouchage des canaux des tubes.

L'assemblage mécanique permet en outre l'utilisation de couvercles de forme complexe réalisées par moulage plastique ce qui permet la connexion aisée du couvercle à la boucle de refroidissement et sa fixation (contrairement aux refroidisseurs brasés qui nécessitent l'ajout de tubulures métalliques et de pattes de fixation sur les couvercles en aluminium extrudé, embouti ou roulé).

Les couvercles, ou boîtes à eau, peuvent être en matière aluminium (du type 3003, par exemple) ou plastique (du type PA66GF30, par exemple). La matière aluminium permet de concevoir des pièces présentant de faibles épaisseurs.

La matière plastique permet de réaliser facilement des formes complexes, facilitant ainsi la fixation du refroidisseur sur un boîtier de batteries et le raccordement de tubulures.

Les couvercles comprennent des tubulures et des cloisons internes permettant de définir un circuitage adéquat pour assurer l'homogénéité de température entre les tubes et le refroidissement équilibré des batteries.

Ces couvercles comprennent en outre des éléments de fixation, tels que des pions de centrage, des passages de vis, des clips.... pour fixer le refroidisseur sur les boîtiers de batteries.

Ils portent, par ailleurs, au moins deux nervures (butées) internes disposées face à face pour empêcher le mouvement relatif de rentrée des tubes dans les boites sous les efforts de manipulations.

L'assemblage mécanique permet, par ailleurs, de réduire les épaisseurs de matière des tubes et de diminuer le nombre de cloisons dans les canaux des tubes.

Du fait qu'un four de brasage n'est pas nécessaire à son assemblage, la taille du refroidisseur de l'invention n'est pas limitée, et la mise en place des sorties de connectique est facilitée.

On note que le refroidisseur de l'invention peut être utilisé pour chauffer ou refroidir une ou plusieurs batteries selon les conditions et les besoins, de sorte à réguler leur température.

Un fluide caloporteur parcourant le refroidisseur peut dans ce cas absorber la chaleur émise par la ou les batteries afin de les refroidir ou, selon les besoins, il peut leur apporter de la chaleur si la température de la ou des batteries est insuffisante pour son/leur bon fonctionnement.

Les tubes, qui sont de préférence en aluminium extrudé, peuvent être coupés à la longueur voulue.

Il est ainsi possible de concevoir une gamme de refroidisseurs adaptée à différentes tailles de batteries.

Les tubes peuvent présenter d'autres formes de section, comme une section circulaire ou ovale, par exemple.

Les tubulures d'entrée et de sortie du liquide peuvent être disposées sur la même boîte collectrice (comme dans le mode de réalisation décrit précédemment) ou sur chacune des deux boîtes.

Des cloisons internes aux boîtes collectrices définissent le type de circuitage du liquide de refroidissement.

## Revendications

1. Refroidisseur (1) pour au moins un élément de stockage d'énergie électrique, le refroidisseur (1) comprenant au moins un conduit (11) de circulation d'un liquide caloporteur dont les extrémités pénètrent dans une boîte collectrice (41, 42), chacune desdites boîtes collectrices (41, 42) comprenant un collecteur (21, 22) présentant un orifice (210) de passage dudit au moins un conduit (11), et un couvercle (31, 32) recouvrant ledit collecteur (21, 22) de sorte à définir un volume de circulation du liquide caloporteur dans lequel ledit au moins un conduit (11) débouche,
ledit au moins un conduit présentant une section droite de forme sensiblement oblongue et l'une des deux surfaces planes dudit conduit oblong étant destinée à être en contact avec le au moins un élément de stockage d'énergie électrique ou à distance et en regard dudit au moins un élément de stockage d'énergie électrique, **caractérisé**
**en ce que** ledit au moins un conduit (11) et ledit couvercle (31, 32) sont assemblés mécaniquement avec ledit collecteur (21, 22), ladite boîte collectrice (41, 42) comprenant en outre au moins un joint d'étanchéité (51) disposé entre ledit collecteur (21, 22) et ledit au moins un conduit (11), d'une part, et entre ledit collecteur (21, 22) et ledit couvercle (31, 32), d'autre part.

2. Refroidisseur (1) selon la revendication 1, **caractérisé en ce que** ledit au moins un conduit (11) est monté serré dans un trou (510) de passage dudit joint d'étanchéité (51) qu'il traverse, de sorte que le joint d'étanchéité (51) est comprimé entre la paroi intérieure dudit orifice (210) de passage du collecteur (21, 22) et la paroi extérieure dudit conduit (11).

3. Refroidisseur (1) selon la revendication 2, **caractérisé en ce que** le trou (510) de passage s'étend dans une tétine (513) du joint d'étanchéité (51) disposée dans l'orifice (210) de passage dudit collecteur (21, 22).

4. Refroidisseur (1) selon la revendication 3, **caractérisé en ce que** la tétine (513) présente sur sa surface extérieure une lèvre (514) périphérique de retenue du joint d'étanchéité (51) sur le collecteur (21, 22).

5. Refroidisseur (1) selon l'une des revendications 1 à 4, **caractérisé en ce que** le bord latéral du joint d'étanchéité (51) est pris en sandwich entre une gorge (212) périphérique ménagée dans le collecteur (21, 22) et le couvercle (31, 32).

6. Refroidisseur (1) selon l'une des revendications 1 à 5, caractérisé en ce ledit au moins un conduit (11) comprend une pluralité de canaux (111) de circulation du liquide caloporteur.

7. Refroidisseur (1) selon l'une des revendications 1 à 6, **caractérisé en ce que** ledit au moins un conduit (11) comprend un évasement (110) d'extrémité pour former un relief de retenue dans un sens dudit au moins un conduit (11) par rapport au collecteur (21, 22).

8. Refroidisseur (1) selon la revendication 7, **caractérisé en ce que** ledit au moins un conduit (11) comprend à chaque extrémité un seul étage d'évasement (110) d'extrémité selon la direction longitudinale dudit conduit (11).

9. Refroidisseur (1) selon la revendication 7 ou 8, **caractérisé en ce que** l'évasement (110) d'extrémité présente une hauteur comprise entre 1 et 10 mm dans le sens longitudinal dudit conduit (11).

10. Refroidisseur (1) selon la revendication 7 **caractérisé en ce que** la largeur de l'évasement (110) d'extrémité est supérieure à la largeur dudit orifice (210) de passage dudit au moins un conduit (11).

11. Refroidisseur (1) selon l'une des revendications 7 à 10 lorsqu'elles dépendent de la revendication 6, **caractérisé en ce que** l'évasement (110) d'extrémité est réalisé à l'intérieur d'un canal (111).

12. Refroidisseur (1) selon la revendication 11, **caractérisé en ce que** l'évasement (110) d'extrémité est réalisé sans déformer les jambes de renfort formant les cloisons latérales dudit canal (111).

13. Refroidisseur (1) selon l'une des revendications 7 à 12, **caractérisé en ce qu'**il comprend au moins une butée (313) de conduit pour retenir ledit au moins un conduit (11) dans l'autre sens par rapport au collecteur (21, 22).

14. Refroidisseur (1) selon la revendication 13, **caractérisé en ce que** ladite au moins une butée (313) est solidaire dudit couvercle (31, 32).

15. Procédé d'assemblage d'un refroidisseur (1) selon la revendication 1 pour au moins un élément de stockage d'énergie électrique, le refroidisseur (1) comprenant au moins un conduit (11) de circulation d'un liquide caloporteur dont les extrémités pénètrent dans une boîte collectrice (41, 42), chaque boîte collectrice (41, 42) comprenant un collecteur (21, 22) et un couvercle (31, 32) recouvrant ledit collecteur (21, 22) de sorte à définir un volume de circulation du liquide caloporteur dans lequel ledit au moins un conduit (11) débouche, le procédé comprenant
les étapes suivantes :
- on positionne au moins un joint d'étanchéité (51) sur le collecteur (21, 22) présentant au moins un orifice (210) de passage d'un conduit (11) de circulation d'un liquide caloporteur et une gorge (212) périphérique de sorte qu'une tétine (513) du joint d'étanchéité (51) soit disposée dans l'orifice (210) de passage dudit collecteur (21, 22) et que le bord latéral du joint d'étanchéité (51) soit placé dans la gorge (212) périphérique dudit collecteur (21, 22),
- on emmanche à force au moins un conduit (11) de circulation d'un liquide caloporteur dans un trou (510) de passage de la tétine (513) de sorte qu'une extrémité dudit au moins un conduit (11) traverse le joint d'étanchéité (51) et le collecteur (21, 22),
- on évase l'extrémité dudit au moins un conduit (11) de sorte à former un relief de retenue dudit conduit (11) dans un sens par rapport au collecteur (21, 22),
- on assemble mécaniquement un couvercle (31, 32) sur le collecteur (21, 22), de sorte à former une première boîte collectrice (41, 42) dans lequel ledit au moins un conduit (11) débouche, en positionnant au préalable le couvercle (31, 32) dans la gorge (212) périphérique dudit collecteur (21, 22) en contact avec le bord latéral du joint d'étanchéité (51),
- on répète les étapes précédentes pour solidariser ledit au moins un conduit (11) à la deuxième boîte collectrice (41, 42) dudit refroidisseur (1).

16. Procédé d'assemblage selon la revendication 15, **caractérisé en ce que** ledit au moins un conduit (11) est solidarisé simultanément à la première et à la deuxième boîte collectrice (41, 42) dudit refroidisseur (1).

## Patentansprüche

1. Kühler (1) für mindestens ein Speicherelement elektrischer Energie, wobei der Kühler (1) mindestens eine Zirkulationsleitung (11) einer Wärmeträgerflüssigkeit enthält, deren Enden in einen Sammelkasten (41, 42) eindringen, wobei jeder der Sammelkästen (41, 42) einen Endboden (21, 22), der eine Durchgangsöffnung (210) der mindestens einen Leitung (11) aufweist, und einen Deckel (31, 32) enthält, der den Endboden (21, 22) bedeckt, um ein Zirkulationsvolumen der Wärmeträgerflüssigkeit zu definieren, in das die mindestens eine Leitung (11) mündet,
wobei die mindestens eine Leitung einen Querschnitt von im Wesentlichen länglicher Form aufweist, und eine der zwei ebenen Flächen der länglichen Leitung dazu bestimmt ist, mit dem mindestens einen Speicherelement elektrischer Energie in Kontakt oder in Abstand und gegenüber dem mindestens einen Speicherelement elektrischer Energie zu sein, **dadurch gekennzeichnet, dass** die mindestens eine Leitung (11) und der Deckel (31, 32) mechanisch mit dem Endboden (21, 22) zusammengebaut sind, wobei der Sammelkasten (41, 42) außerdem mindestens eine Dichtung (51) enthält, die zwischen dem Endboden (21, 22) und der mindestens einen Leitung (11) einerseits und zwischen dem Endboden (21, 22) und dem Deckel (31, 32) andererseits angeordnet ist.

2. Kühler (1) nach Anspruch 1, **dadurch gekennzeichnet, dass** die mindestens eine Leitung (11) in ein Durchgangsloch (510) der Dichtung (51) presseingepasst montiert ist, das sie durchquert, so dass die Dichtung (51) zwischen der Innenwand der Durchgangsöffnung (210) des Endbodens (21, 22) und der Außenwand der Leitung (11) komprimiert wird.

3. Kühler (1) nach Anspruch 2, **dadurch gekennzeichnet, dass** das Durchgangsloch (510) sich in einer Tülle (513) der Dichtung (51) erstreckt, die in der Durchgangsöffnung (210) des Endbodens (21, 22) angeordnet ist.

4. Kühler (1) nach Anspruch 3, **dadurch gekennzeichnet, dass** die Tülle (513) an ihrer Außenfläche eine Umfangslippe (514) für den Halt der Dichtung (51) auf dem Endboden (21, 22) aufweist.

5. Kühler (1) nach einem der Ansprüche 1 bis 4, **dadurch gekennzeichnet, dass** der Seitenrand der Dichtung (51) zwischen einer im Endboden (21, 22) ausgesparten Umfangsrille (212) und dem Deckel (31, 32) eingeklemmt ist.

6. Kühler (1) nach einem der Ansprüche 1 bis 5, **dadurch gekennzeichnet, dass** die mindestens eine Leitung (11) eine Vielzahl von Zirkulationskanälen (111) der Wärmeträgerflüssigkeit enthält.

7. Kühler (1) nach einem der Ansprüche 1 bis 6, **dadurch gekennzeichnet, dass** die mindestens eine Leitung (11) eine Endausweitung (110) enthält, um ein Halterelief in einer Richtung der mindestens einen Leitung (11) bezüglich des Endbodens (21, 22) zu formen.

8. Kühler (1) nach Anspruch 7, **dadurch gekennzeichnet, dass** die mindestens eine Leitung (11) an jedem Ende eine einzige Endausweitungsstufe (110) gemäß der Längsrichtung der Leitung (11) enthält.

9. Kühler (1) nach Anspruch 7 oder 8, **dadurch gekennzeichnet, dass** die Endausweitung (110) eine Höhe zwischen 1 und 10 mm in Längsrichtung der Leitung (11) aufweist.

10. Kühler (1) nach Anspruch 7, **dadurch gekennzeichnet, dass** die Breite der Endausweitung (110) größer ist als die Breite der Durchgangsöffnung (210) der mindestens einen Leitung (11).

11. Kühler (1) nach einem der Ansprüche 7 bis 10, wenn sie von Anspruch 6 abhängen, **dadurch gekennzeichnet, dass** die Endausweitung (110) im Inneren eines Kanals (111) hergestellt ist.

12. Kühler (1) nach Anspruch 11, **dadurch gekennzeichnet, dass** die Endausweitung (110) hergestellt wird, ohne die Verstärkungsstreben zu verformen, die die seitlichen Trennwände des Kanals (111) bilden.

13. Kühler (1) nach einem der Ansprüche 7 bis 12, **dadurch gekennzeichnet, dass** er mindestens einen Leitungsanschlag (313) enthält, um die mindestens eine Leitung (11) in der anderen Richtung bezüglich des Endbodens (21, 22) zu halten.

14. Kühler (1) nach Anspruch 13, **dadurch gekennzeichnet, dass** der mindestens eine Anschlag (313) fest mit dem Deckel (31, 32) verbunden ist.

15. Verfahren zum Zusammenbau eines Kühlers (1) nach Anspruch 1 für mindestens ein Speicherelement elektrischer Energie, wobei der Kühler (1) mindestens eine Zirkulationsleitung (11) einer Wärmeträgerflüssigkeit enthält, deren Enden in einen Sammelkasten (41, 42) eindringen, wobei jeder Sammelkasten (41, 42) einen Endboden (21, 22) und einen Deckel (31, 32) enthält, der den Endboden (21, 22) bedeckt, um ein Zirkulationsvolumen der Wärmeträgerflüssigkeit zu definieren, in das die mindestens eine Leitung (11) mündet, wobei das Verfahren die folgenden Schritte enthält:
- mindestens eine Dichtung (51) wird auf dem Endboden (21, 22) positioniert, der mindestens eine Durchgangsöffnung (210) einer Zirkulationsleitung (11) einer Wärmeträgerflüssigkeit und eine Umfangsrille (212) aufweist, so dass eine Tülle (513) der Dichtung (51) in der Durchgangsöffnung (210) des Endbodens (21, 22) angeordnet und der Seitenrand der Dichtung (51) in der Umfangsrille (212) des Endbodens (21, 22) platziert wird,
- mindestens eine Zirkulationsleitung (11) einer Wärmeträgerflüssigkeit wird in ein Durchgangsloch (510) der Tülle (513) eingepresst, so dass ein Ende der mindestens einen Leitung (11) die Dichtung (51) und den Endboden (21, 22) durchquert,
- das Ende der mindestens einen Leitung (11) wird ausgeweitet, um ein Halterelief der Leitung (11) in einer Richtung bezüglich des Endbodens (21, 22) zu bilden,
- ein Deckel (31, 32) wird mechanisch auf den Endboden (21, 22) zusammengebaut, um einen ersten Sammelkasten (41, 42) zu bilden, in den die mindestens eine Leitung (11) mündet, indem vorab der Deckel (31, 32) in der Umfangsrille (212) des Endbodens (21, 22) in Kontakt mit dem Seitenrand der Dichtung (51) positioniert wird,
- die vorhergehenden Schritte werden wiederholt, um die mindestens eine Leitung (11) fest mit dem zweiten Sammelkasten (41, 42) des Kühlers (l) zu verbinden.

16. Verfahren zum Zusammenbau nach Anspruch 15, **dadurch gekennzeichnet, dass** die mindestens eine Leitung (11) gleichzeitig fest mit dem ersten und dem zweiten Sammelkasten (41, 42) des Kühlers (1) verbunden wird.

## Claims

1. Cooler (1) for at least one electrical energy storage element, the cooler (1) comprising at least one heat-transfer liquid circulation duct (11) the ends of which penetrate into a manifold (41, 42), each of said manifolds (41, 42) comprising a collector (21, 22) having a through-opening (210) of said at least one duct (11), and a cover (31, 32) covering said collector (21, 22) in such a way as to define a volume for circulation of the heat-transfer liquid into which said at least one duct (11) opens,
said at least one duct having an essentially oblong-shaped cross section and one of the two planar surfaces of said oblong duct being designed to be in contact with the at least one electrical energy storage element or remote from and facing said at least one electrical energy storage element, **characterized**
**in that** said at least one duct (11) and said cover (31, 32) are mechanically assembled with said collector (21, 22), said manifold (41, 42) further comprising at least one seal (51) disposed between said collector (21, 22) and said at least one duct (11), on the one hand, and between said collector (21, 22) and said cover (31, 32), on the other hand.

2. Cooler (1) according to Claim 1, **characterized in that** said at least one duct (11) is tight-fited in a through-hole (510) of said seal (51) through which it passes, so that the seal (51) is compressed between the interior wall of said through-orifice (210) of the collector (21, 22) and the exterior wall of said duct (11) .

3. Cooler (1) according to Claim 2, **characterized in that** the through-hole (510) extends in a nipple (513) of the seal (51) disposed in the through-orifice (210) of said collector (21, 22).

4. Cooler (1) according to Claim 3, **characterized in that** the nipple (513) has on its exterior surface a peripheral lip (514) to retain the seal (51) on the collector (21, 22).

5. Cooler (1) according to one of Claims 1 to 4, **characterized in that** the lateral edge of the seal (51) is sandwiched between a peripheral groove (212) formed in the collector (21, 22) and the cover (31, 32).

6. Cooler (1) according to one of Claims 1 to 5, **characterized in that** said at least one duct (11) comprises a plurality of heat-transfer liquid circulation channels (111).

7. Cooler (1) according to one of Claims 1 to 6, **characterized in that** said at least one duct (11) comprises an end flare (110) to form a retaining relief in one direction of said at least one duct (11) relative to the collector (21, 22).

8. Cooler (1) according to Claim 7, **characterized in that** said at least one duct (11) comprises at each end a single end flare stage (110) in the longitudinal direction of said duct (11).

9. Cooler (1) according to Claim 7 or 8, **characterized in that** the end flare (110) has a height between 1 and 10 mm inclusive in the longitudinal direction of said duct (11).

10. Cooler (1) according to Claim 7, **characterized in that** the width of the end flare (110) is greater than the width of said through-orifice (210) of said at least one duct (11).

11. Cooler (1) according to one of Claims 7 to 10 when dependent on Claim 6, **characterized in that** the end flare (110) is produced inside a channel (111).

12. Cooler (1) according to Claim 11, **characterized in that** the end flare (110) is produced without deforming the reinforcing legs forming the lateral partition walls of said channel (111).

13. Cooler (1) according to one of Claims 7 to 12, **characterized in that** it comprises at least one duct abutment (313) to retain said at least one duct (11) in the other direction relative to the collector (21, 22).

14. Cooler (1) according to Claim 13, **characterized in that** said at least one abutment (313) is fastened to said cover (31, 32).

15. Method of assembling a cooler (1) according to Claim 1 for at least one electrical energy storage element, the cooler (1) comprising at least one heat-transfer liquid circulation duct (11) the ends of which penetrate into a manifold (41, 42), each manifold (41, 42) comprising a collector (21, 22) and a cover (31, 32) covering said collector (21, 22) in such a way as to define a volume for circulation of the heat-transfer liquid into which said at least one duct (11) opens, the method comprising the following steps:
- at least one seal (51) is positioned on the collector (21, 22) having at least one through-orifice (210) for a heat-transfer liquid circulation duct (11) and a peripheral groove (212) so that a nipple (513) of the seal (51) is disposed in the through-orifice (210) of said collector (21, 22) and the lateral edge of the seal (51) is placed in the peripheral groove (212) of said collector (21, 22),
- at least one heat-transfer liquid circulation duct (11) is force-fitted into a through-hole (510) of the nipple (513) so that one end of said at least one duct (11) passes through the seal (51) and the collector (21, 22),
- the end of said at least one duct (11) is flared so as to form a relief for retaining said duct (11) in one direction relative to the collector (21, 22),
- a cover (31, 32) is mechanically assembled onto the collector (21, 22), so as to form a first manifold (41, 42) into which said at least one duct (11) opens, the cover (31, 32) being positioned beforehand in the peripheral groove (212) of said collector (21, 22) in contact with the lateral edge of the seal (51),
- the preceding steps are repeated to fasten said at least one duct (11) to the second manifold (41, 42) of said cooler (1).

16. Assembly method according to Claim 15, **characterized in that** said at least one duct (11) is fastened simultaneously to the first and second manifolds (41, 42) of said cooler (1).
